# EUROPEAN PATENT APPLICATION

(11) **EP 4 711 412 A1**
(43) Date of publication of application: **18.03.2026**
(21) Application number: 25201680.3
(22) Date of filing: 11.09.2025
(51) Int. Cl.: C08K 11/00, C08J 9/00

(54) **AUTOMOTIVE PAINT SLUDGE CHAR-REINFORCED POLYPROPYLENE MOLDED PARTS**

(30) Priority: 11.09.2024 US 202463693519 P
(71) Applicant: Magna Exteriors Inc., Aurora ON L4G 7K1 (CA)
(72) Inventor: Baltazar y Jimenez, Alexis, Troy, Michigan 48098 (US); Walia, Parvinder S., Shelby Township, Michigan 48315 (US)
(74) Representative: Witte, Weller & Partner Patentanwälte mbB

(57) **Abstract**

An expanded polymer product which includes a milled pyrolysis char material. A vehicle part produced from a polymer including from about 5-50% by weight pyrolysis char material used as a sustainable filler which reduces the carbon footprint of the subsequent vehicle part.

## Description

### CROSS-REFERENCE TO RELATED APPLICATIONS

This application is a Non-Provisional Patent Application and claims benefit of United States Provisional Patent Application No. 63/693,519, filed September 11, 2024. The disclosure of the above application is incorporated herein by reference.

### FIELD OF THE INVENTION

The present invention relates to automotive paint sludge char-reinforced polypropylene molded parts.

### BACKGROUND OF THE INVENTION

Paint sludge is a waste by-product generated during the painting process. In automotive painting lines and booths, excess paint overspray is collected by water or airflow systems designed to capture particulate matter. This mixture of paint particles, solvents, primer, and water contaminants coagulates into a viscous, semi-solid material known as paint sludge.

The composition of paint sludge can vary widely depending on the types of paints and primers used, such as water-based or solvent-based paints. Proper disposal has significant environmental implications and cost implications. In North America, the most common disposal of paint sludge is through landfill.

A better alternative to landfilling paint sludge is to pyrolyze it. Pyrolysis is a thermal decomposition process conducted without oxygen that can transform paint sludge into valuable by-products like char, oil, and gas. The general steps for pyrolyzing paint sludge typically include:
1. Preparation: The paint sludge is first dried to remove excess water content, making it more suitable for thermal processing.
2. Heating: The dried paint sludge is then introduced into a pyrolysis reactor. The reactor is gradually heated to temperatures typically ranging up to 900°C.
3. Decomposition: As the temperature increases, the paint sludge undergoes thermal decomposition. Without oxygen present, the organic components break down into smaller molecules.
4. Separation: The result of the pyrolysis process includes a solid residue (char), along with a mix of liquid (pyrolysis oil) and gaseous by-products. Char is collected from the bottom of the reactor, while oil and gases can be condensed and separated in subsequent steps. Pyrolysis oil and gases may serve as fuels or be used in other chemical feedstocks.

It is therefore a goal in the art to reduce the amount of landfilled paint by-products by reusing them in vehicle manufacturing.

### SUMMARY OF THE INVENTION

An expanded polymer product which includes a milled pyrolysis char material.

A vehicle part produced from a polymer including from about 1% to about 50%, typically from about 2-50% by weight pyrolysis char material used as a substitute for a talc filler material which reduces the carbon footprint of the subsequent vehicle part. When used in an EPP or EPA foam the amount of char filler is typically about 1-10%, and preferably 2-5% by weight.

The char produced from the pyrolysis process is milled until a specific particle size distribution is attained which is useful in automotive polymer materials. The resulting particles are used as filler material for composites generally the particle size is preferred to be 10 microns or less and preferably 5 microns or less when used as a recycled filler in the present invention.

Main benefits: in addition to adding circularity by avoiding landfill and CO2 footprint reduction, paint sludge char can be used as a sustainable filler and also enable lightweighting, e.g., to displace talc (density: 2.8 g/cm³) with a lightweight alternative with much lower density: <0.9 g/cm³.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### DESCRIPTION OF THE DRAWINGS

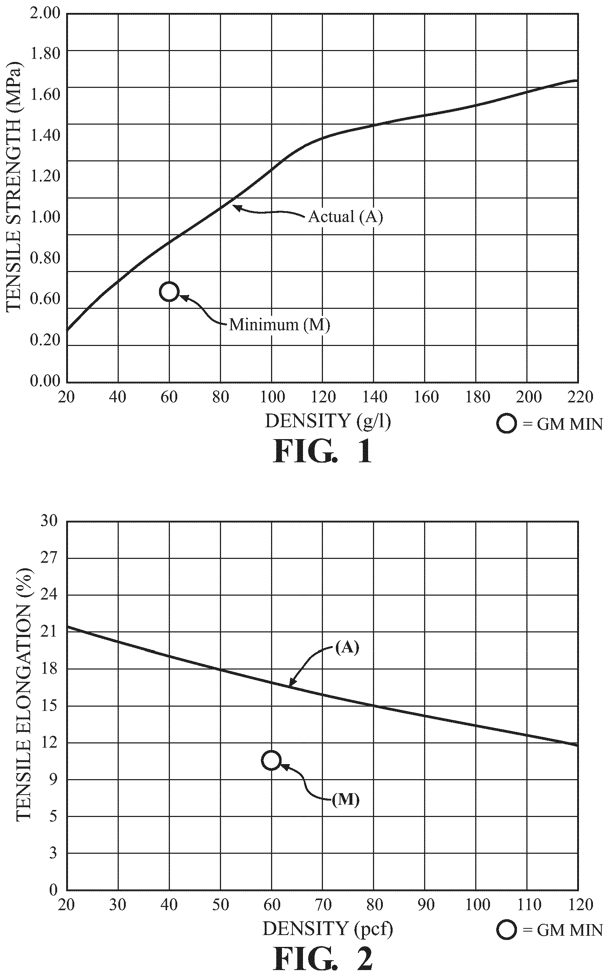

Figure 1 is a graph showing tensile strength properties of the EPP produced with 3% paint sludge char with tensile strength in MPa on the y-axis and density in grams/liter shown on the x-axis;
Figure 2 is a graph showing tensile elongation properties of the EPP produced with 3% paint sludge char with tensile elongation % shown on the y-axis and density in PCF shown on the x-axis; and,

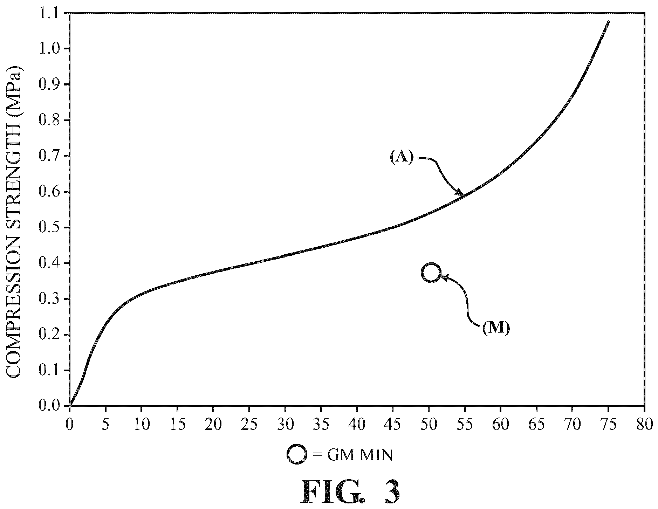

Figure 3 is a graph showing compression strength properties of the EPP produced with 3% paint sludge char with compression strength in MPa shown on the y-axis and minutes shown on the x-axis.

### DETAILED DESCRIPTION OF THE PREFERRED EMBODIMENTS

The following description of the preferred embodiment(s) is merely exemplary in nature and is in no way intended to limit the invention, its application, or uses.

Decarburization and use of recycled plastics in the automotive industry has become a goal in automotive manufacturing. In some cases, this may become a regulation or a mandate in the future. Therefore, there has been an increasing need or goal in the industry to reduce the carbon footprint in manufacturing of composite components for vehicles in order to meet these goals and standards.

In the present application paint sludge from automobile or other vehicle manufacturing is pyrolyzed for reclaiming organic by-products from these waste materials. Liquidous materials produced during the pyrolysis are reclaimed and used for fuels and chemical additives. Solids produced from the process are termed pyrolysis char. In the present application the pyrolysis char is milled to provide a consistent sized material which is to be used as a sustainable filler in polypropylene polymers. This char filled polypropylene polymers are then used to make vehicle parts. Because this process uses waste products from vehicle manufacturing it reduces the carbon footprint in vehicle manufacturing and increases the amounts of recycled materials used in the vehicle part.

Molding of polypropylene parts with suitable polypropylene or other thermoplastic polyolefins is known to those skilled in the art. Depending on the part molded long glass fiber and/or carbon fiber reinforcement or no structural reinforcing materials may be used. Pigments or other colorants can be used if desired. Other known inorganic fillers, flow agents as are commonly used for injection molding of thermoplastics are readily useable in the pyrolysis char reinforced automobile parts of the present invention. Co-injection molding is often used to provide a backing material with a class A surface layer which can be painted. One example of this type of process is shown in co-assigned U.S. Patent No. 9,862,125 to Birka which is incorporated herein by reference.

A molded component based on and expanded foam polypropylene or polyamide or mixtures of the two is provided which is partially reinforced with paint sludge char particles after pyrolysis at loadings between 5 wt.% - 50%, and more preferably between 20 wt.% to 40 wt.%, with the intention to reduce part weight and reduce the carbon footprint of the part. In the co-injection molded embodiment of the present invention paint sludge char material is used with particle sizes generally less than 10 microns and preferably less than 5 microns in amounts of from 1-10% by weight and typically 2-5% with a preferred amount of about 3% by weight.

For EPP molding, steam is used to expand the EPP beads and typically the blowing agent is a hydrocarbon gas like pentane. The key is the introduction of paint char does not affect the steam molding process or the final foam properties. The molded foam density is important and ranges from 20-250 kg/m3 (EPA foam is higher density than EPP).

Where the molded component is produced by injection molding to produce exterior trim, exterior panels, or exterior body parts that may be visible or not visible, such as AGS components, FEM components, wheel wells, and underbody shields.

Where the molded component is produced by steam molding to produce Expanded PP (EPP) and Expanded Polyamide (EPA) applications relating to vehicle sound insulation, crumple zones for energy absorption, or dunnage for in-plant logistic applications.

As will be readily appreciated by those skilled in the art normal fillers and colorants such as carbon black, titanium oxide, calcium, glass fibers, nano spheres and carbon fibers, graphite and the like may also be used in the present invention without departing from the scope of the present invention.

Where the molded component is produced by co-injection molding, and the paint sludge char is mixed with an additive such as TEO, PP or with TPO to produce painted vehicle applications such as bumpers.

### Example 1

A University of Guelph-pyrolyzed wet paint sludge of approximately 10 microns and less particle size was mixed to form a masterbatch which included 30 wt.% char, and the remainder polypropylene. A random copolymer (INEOS R08S-00) was used to dilute the masterbatch to produce EPP beads with a final concentration of the paint sludge char being about 3%. This EPP material was used to produce large rectangular foam samples. 1%, 2%, 3%, 5%, 7%, and 10% by weight fillers are used with particle sizes of 10 microns or less and in a difference batch 5 microns or less particle size and they are found to produced foam structures suitable for dunnage racks, front end module crush structures and the like.

The EPP beads are used to injection mold a part packaging tray suitable for parts shipment.

### Example 2

A University of Guelph-pyrolyzed wet paint sludge char material of approximately 5 microns or less particle size was mixed to form a masterbatch which included 30 wt.% char, and the remainder polypropylene. The masterbatch was mixed with thermoplastic polyolefins which are suitable for painting and a final concentration of the paint sludge char in the thermoplastic polyolefin being about 3%.

Referring to the drawings the actual (A) properties of tensile strength, tensile elongation and compression strength all exceeded the minimum M properties required for use in vehicle applications.

### Example 3

The masterbatch of Example 2 is mixed with a suitable thermoplastic elastomer olefin, in a first batch and a thermoplastic olefin in a second batch, so that the final amount of char is 1%, 2%, 3%, 5%, 8%, 10%, 15%, 20%, 30%, 40% and 50% in each of these batches. These batches are used in a co-injection molding process where a class A surface layer is molded over a core made of the char filled olefin as the structural backing layer (such as shown in the process of co-assigned U.S. Patent Number 9,862,125 which is incorporated herein by reference thereto). Bumpers, tailgates, liftgates, active grill system components, FEM components, wheel wells, and underbody shields are molded and found to be suitable for automotive applications. It is found that a core molded part can also be painted to achieve a class A surface automotive part.

### Example 4

A University of Guelph-pyrolyzed wet paint sludge of approximately 10 microns and less particle size is mixed to form a masterbatch which included 30 wt.% char, and the remainder expandable foam polyamide. A random polyamide is used to dilute the masterbatch to produce EPP beads with a final concentration of the paint sludge char being about 3%. This EPP material is used to produce large rectangular foam samples. 1%, 2%, 3%, 5%, 7%, and 10% by weight fillers are used with particle sizes of 10 microns or less and in a difference batch 5 microns or less particle size and they are found to produced foam structures suitable for dunnage racks, front end module crush structures and the like.

The expandable polyamide beads are used to injection mold a part packaging tray suitable for parts shipment.

Mixtures containing both polyamide and polypropylene are formulated using this process and are found to produce suitable packaging trays and other moldable components.

The description of the invention is merely exemplary in nature and, thus, variations that do not depart from the gist of the invention are intended to be within the scope of the invention. Such variations are not to be regarded as a departure from the spirit and scope of the invention.

## Claims

1. A molded vehicle manufacturing component comprising polypropylene, polyamide or mixtures thereof which is at least partially reinforced with paint sludge char particles after pyrolysis at loadings between 1-10% by weight, wherein the molded component is produced by steam molding to produce Expanded PP (EPP) or Expanded Polyamide (EPA) applications relating to vehicle sound insulation, crumple zones for energy absorption, or dunnage for in-plant logistic applications.

2. The molded vehicle manufacturing component of claim 1, wherein the char comprises an amount of about 1-5% by weight, preferably wherein the char comprises 2-5% by weight, more preferably wherein the char comprises about 3% by weight.

3. The molded automotive component of claim 1 or 2, wherein the char has a particle size of less than 10 microns, preferably wherein the char has a particle size of less than 5 microns.

4. A foam material comprising a foamable polymer selected from the group consisting essentially of expanded polypropylene, expanded polyamide, and mixtures thereof which includes a pyrolyzed paint char material having a particle size of less than about 10 microns in an amount of from about 1-10% by weight and suitable fillers and dyes and colorants for making a foamed part.

5. The foam material of claim 4, wherein the particle size is from about 2 to about 10 microns, preferably wherein the particle size is less than 5 microns, more preferably wherein the particle size is about 3 microns.

6. The foam material of claim 4 or 5, which is an expanded polypropylene.

7. The foam material of any one of claims 4 to 6, further comprising from about 2-5% by weight pyrolyzed paint sludge char material, preferably comprising about 3% by weight pyrolyzed paint sludge char material.

8. A molded automotive component based on polypropylene, polyamide or mixtures thereof which is at least partially reinforced with paint sludge char particles after pyrolysis at loadings between 1-50% by weight, wherein the molded component is produced by co-injection molding, and the paint sludge char is mixed with an additive such as thermoplastic elastomer olefins or with thermoplastic polyolefins in the core layer.

9. The molded automotive component of claim 8, further comprising between about 20-40% by weight paint sludge char, with the intention to reduce part weight and reduce the carbon footprint of the part.

10. The molded automotive component of claim 8 or 9, is produced by injection molding to produce exterior trim, exterior panels, or exterior body parts that may be visible or not visible, such as fascia, active grill system components, front end module components, wheel wells, and underbody shields.

11. A molded automotive component comprising:
a co-injection molded automotive part having an outer class A show surface layer co-injection over molded over a solid or foamed polyolefin substrate containing 2-5% by weight of a paint sludge char filler material having a particle size of 10 microns or less.

12. The molded automotive component of claim 11, wherein the paint sludge char filler material has a particle size of 5 microns or less.

13. The molded automotive component of claim 11 or 12, further comprising about 3% by weight paint sludge char.

14. The molded automotive component of any one of claims 11 to 13, wherein the substrate is an EPP foam substrate.
